(19) Europäisches Patentamt
European Patent Office
Office européen des brevets

(11) **EP 4 628 949 A1**

(12) **EUROPEAN PATENT APPLICATION**
published in accordance with Art. 153(4) EPC

(43) Date of publication:
**08.10.2025 Bulletin 2025/41**

(21) Application number: **23897444.8**

(22) Date of filing: **10.11.2023**

(51) International Patent Classification (IPC):
**G02B 6/02** $^{(2006.01)}$ **G02B 6/036** $^{(2006.01)}$

(52) Cooperative Patent Classification (CPC):
**G02B 6/02042; G02B 6/02; G02B 6/036**

(86) International application number:
**PCT/JP2023/040553**

(87) International publication number:
**WO 2024/116792 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022192004**

(71) Applicant: **SUMITOMO ELECTRIC INDUSTRIES, LTD.**
**Osaka-shi, Osaka 541-0041 (JP)**

(72) Inventor: **HAYASHI, Tetsuya**
**Osaka-shi, Osaka 541-0041 (JP)**

(74) Representative: **TBK**
**Bavariaring 4-6**
**80336 München (DE)**

(54) **MULTICORE OPTICAL FIBER**

(57)     A multi-core optical fiber includes four cores each extending along a center axis of the multi-core optical fiber, common cladding enclosing the four cores and having a lower refractive index than each of the four cores and coating resin enclosing the common cladding. The common cladding has a diameter of 124.5 $\mu$m to 125.5 $\mu$m. For each of the four cores, letting an effective area at a wavelength of 1550 nm be Aeff [$\mu$m$^2$] and a cable cutoff wavelength be $\lambda$cc [$\mu$m], Aeff satisfies Expression (1) and Expression (2) while $\lambda$cc satisfies Expression (1) and Expression (3). The four cores are arranged such that Dc satisfies Expression (4) in relation to Aeff and $\lambda$cc of each of the first core and the second core while OCT, Aeff, and $\lambda$cc of the first core satisfy Expression (5).

**FIG. 1**

EP 4 628 949 A1

**Description**

TECHNICAL FIELD

The present disclosure relates to a multi-core optical fiber. This application claims the priority of Japanese Patent Application No. 2022-192004, filed November 30, 2022, the entirety of which is incorporated herein by reference.

BACKGROUND ART

A step-index multi-core optical fiber (hereinafter abbreviated to MCF) including four cores and common cladding is disclosed in each of PTL 1 and NPL 1. Another MCF is disclosed in PTL 2 in which a first cladding region having a low refractive index is provided between each core and common cladding, whereby the crosstalk (hereinafter abbreviated to XT) between cores is reduced.

CITATION LIST

PATENT LITERATURE

**[0003]**

　　　PTL 1: Japanese Unexamined Patent Application Publication No. 2013-88458
　　　PTL 2: Japanese Unexamined Patent Application Publication No. 2020-86054
　　　PTL 3: Japanese Unexamined Patent Application Publication No. 2017-509171

NON PATENT LITERATURE

**[0004]**

　　　NPL 1: T. Matsui et al., "STEP-INDEX PROFILE MULTI-CORE FIBRE WITH STANDARD 125μM CLADDING TO FULL-BAND APPLICATION", ECOC 2019, M. 1. D. 3
　　　NPL.2: Y. Sagae et al., "Ultra-Low-XT Multi-Core Fiber with Standard 125-μm Cladding for Long-Haul Transmission", OECC 2019, TuC3-4
　　　NPL 3: T. Hayashi et al., "Uncoupled Multi-core Fiber Design for Practical Bidirectional Optical Communications," OFC, M1E. 1
　　　NPL 4: R. J. Black and C. Pask, J. Opt. Soc. Am. A, JOSAA 1(11), p.1129-1131, 1984
　　　NPL 5: Y. Kobayashi and T. Hayashi, "Behavior and measurement method of inter-core crosstalk in multicore fibers with core-dependent loss," Opt. Express 31(1), pp.502-508 (2023).

SUMMARY OF INVENTION

An MCF according to the present disclosure includes four cores each extending along a center axis of the MCF, common cladding enclosing the four cores and having a lower refractive index than each of the four cores, and coating resin enclosing the common cladding. The common cladding has a diameter of 124.5 μm to 125.5 μm. For each of the four cores, letting an effective area at a wavelength of 1550 nm be Aeff [μm$^2$] and a cable cutoff wavelength be λcc [μm], Aeff satisfies Expression (1) and Expression (2) while λcc satisfies Expression (1) and Expression (3):

$$\text{Aeff} \leq -11.919\lambda\text{cc}^2 + 153.67\lambda\text{cc} - 105.98 \quad (1)$$

$$70 \leq \text{Aeff} \leq 101.2 \quad (2)$$

$$1.270 \leq \lambda\text{cc} \leq 1.530 \quad (3)$$

In a cross section orthogonal to the center axis, letting a center-to-center distance between a first core that is one of the four cores and a second core that is located closest to the first core be Dc [μm], and a shortest distance between a center of the first core and an interface between the common cladding and the coating resin be OCT [μm], the four cores

are arranged such that Dc satisfies Expression (4) in relation to Aeff and λcc of each of the first core and the second core, and such that OCT, Aeff, and λcc of the first core satisfy Expression (5):

$$\text{Dc} \geq 62.67 - 44.75\lambda\text{cc} + 0.2217\text{Aeff} + 9.911\lambda\text{cc}^2$$
$$- 8.461 \times 10^{-4}\text{Aeff}^2 + 3.981 \times 10^{-2}\lambda\text{ccAeff} \quad (4)$$

$$\text{OCT} \geq 76.53 - 70.55\lambda\text{cc} + 0.3821\text{Aeff} + 19.56\lambda\text{cc}^2$$
$$- 6.480 \times 10^{-4}\text{Aeff}^2 + 7.279 \times 10^{-2}\lambda\text{ccAeff} \quad (5)$$

BRIEF DESCRIPTION OF DRAWINGS

FIG. 1 illustrates a cross section of an MCF according to an embodiment that is taken orthogonally to the center axis thereof.

FIG. 2 is a chart illustrating the relationship between the minimum value of adjacent-core pitch and effective area, the relationship making the XT in counter-propagation at the wavelength 1625 nm be $10^{-4}/(100\ \text{km})^2$ or less and being plotted for a plurality of cutoff frequencies.

FIG. 3 is a chart illustrating the relationship between the lower limit of outer cladding thickness and effective area, the relationship making the leakage loss at the wavelength 1625 nm be 0.001 dB/km or less and being plotted for a plurality of cutoff frequencies.

FIG. 4 is a chart illustrating the relationship between the lower limit of outer cladding thickness and effective area, the relationship making the leakage loss at the wavelength 1625 nm be 0.0005 dB/km or less and being plotted for a plurality of values of λcc.

FIG. 5 is a graph illustrating the relationship between the upper limit of effective area and cutoff frequency, the relationship being plotted for a plurality of cladding diameters and realizing a median design value for core pitch that makes the XT at the wavelength 1625 nm satisfy -40 dB/km or less and the leakage loss be 0.001 dB/km or less even if the core pitch varies by $\pm$ 1 $\mu$m relative to the median design value.

FIG. 6 is a graph illustrating the relationship between the upper limit of effective area and cutoff frequency, the relationship being plotted for a plurality of cladding diameters and realizing a median design value for core pitch that makes the XT at the wavelength 1625 nm satisfy -40 dB/km or less and the leakage loss be 0.0005 dB/km or less even if the core pitch varies by $\pm$1 $\mu$m relative to the median design value.

FIG. 7 illustrates a cross section of an MCF according to a first modification that is taken orthogonally to the center axis thereof.

FIG. 8 illustrates a cross section of an MCF according to a second modification that is taken orthogonally to the center axis thereof.

FIG. 9 illustrates refractive index profiles around the core that are applicable to the MCF according to the present disclosure.

FIG. 10 illustrates refractive index profiles around the core that are applicable to the MCF according to the present disclosure.

DETAILED DESCRIPTION

[Problems to be Solved by Present Disclosure]

According to NPL 2, the MCF disclosed in PTL 2 generates an increased loss in a range of 1580 nm or longer. In the known arts, the leakage loss at a wavelength of 1625 nm is not reduced satisfactorily. That is, the use of the L band (wavelengths from 1565 nm to 1625 nm) in long-distance transmission increases the transmission loss and therefore deteriorates the quality of signal transmission.

The present disclosure provides an MCF that can reduce a deterioration of signal-transmission quality in a wavelength range of 1530 nm to 1625 nm.

[Advantageous Effects of Present Disclosure]

The MCF according to the present disclosure can reduce a deterioration of signal-transmission quality in a wavelength range of 1530 nm to 1625 nm.

[Description of Embodiments of Present Disclosure]

First, embodiments of the present disclosure will be described in order.

(1) The MCF according to an embodiment of the present disclosure includes four cores each extending along a center axis of the MCF, common cladding enclosing the four cores and having a lower refractive index than each of the four cores, and coating resin enclosing the common cladding. The common cladding has a diameter of 124.5 $\mu$m to 125.5 $\mu$m. For each of the four cores, letting an effective area at a wavelength of 1550 nm be Aeff [$\mu$m$^2$] and a cable cutoff wavelength be $\lambda$cc [$\mu$m], Aeff satisfies Expression (1) and Expression (2) while $\lambda$cc satisfies Expression (1) and Expression (3).

In a cross section orthogonal to the center axis, letting a center-to-center distance between a first core that is one of the four cores and a second core that is located closest to the first core be Dc [$\mu$m] and a shortest distance between a center of the first core and an interface between the common cladding and the coating resin be OCT [$\mu$m], the four cores are arranged such that Dc satisfies Expression (4) in relation to Aeff and $\lambda$cc of each of the first core and the second core while OCT, Aeff, and $\lambda$cc of the first core satisfy Expression (5).

$$\text{Aeff} \leq -11.919\lambda\text{cc}^2 + 153.67\lambda\text{cc} - 105.98 \quad (1)$$

$$70 \leq \text{Aeff} \leq 101.2 \quad (2)$$

$$1.270 \leq \lambda\text{cc} \leq 1.530 \quad (3)$$

$$\text{Dc} \geq 62.67 - 44.75\lambda\text{cc} + 0.2217\text{Aeff} + 9.911\lambda\text{cc}^2 \\ - 8.461 \times 10^{-4}\text{Aeff}^2 + 3.981 \times 10^{-2}\lambda\text{cc Aeff} \quad (4)$$

$$\text{OCT} \geq 76.53 - 70.55\lambda\text{cc} + 0.3821\text{Aeff} + 19.56\lambda\text{cc}^2 \\ - 6.480 \times 10^{-4}\text{Aeff}^2 + 7.279 \times 10^{-2}\lambda\text{cc Aeff} \quad (5)$$

In the above MCF, the XT in co-propagation between the first core and the second core at the wavelength 1625 nm is 10$^{-4}$/km or less. Furthermore, the leakage loss at the wavelength 1625 nm is 0.001 dB/km or less. Such a configuration reduces a deterioration of signal-transmission quality at the wavelength 1625 nm. Employing the above MCF reduces the deterioration of signal-transmission quality in long-distance transmission with counter-propagation at least within a wavelength range of 1530 nm to 1625 nm.

(2) In embodiment (1) above, for each of the four cores, Aeff may satisfy Expression (6) while $\lambda$cc may satisfy Expression (7):

$$70 \leq \text{Aeff} \leq 93.0 \quad (6)$$

$$1.270 \leq \lambda\text{cc} \leq 1.460 \quad (7)$$

Such a configuration reduces the deterioration of signal-transmission quality in long-distance transmission with counter-propagation at least within a wavelength range of 1460 nm to 1625 nm. That is, the deterioration of signal-transmission quality is reduced within a wavelength range of 1460 nm to 1625 nm or a wavelength range of 1530 nm to 1625 nm.

(3) In embodiment (1) or (2) above, for each of the four cores, $\lambda$cc may satisfy Expression (8):

$$1.360 \leq \lambda\text{cc} \quad (8)$$

Such a configuration enhances the confinement to the cores and therefore further reduces the XT and the leakage loss.

(4) In any of embodiments (1) to (3) above, the four cores may be arranged such that the OCT, Aeff, and λcc of the first core satisfy Expression (9):

$$OCT \geq 78.90 - 72.75\lambda cc + 0.3936 Aeff + 20.14\lambda cc^2$$
$$- 6.704 \times 10^{-4} Aeff^2 + 7.480 \times 10^{-2}\lambda cc Aeff \quad (9)$$

In such a configuration, the leakage loss at the wavelength 1625 nm is 0.0005 dB/km or less.

(5) In any of embodiments (1) to (4) above, in the cross section, the four cores may have respective centers that are located one each at four vertices of a square each of whose sides has a length Dc. In such a configuration, since the four cores are arranged in symmetry, optical characteristics are evened out among the four cores.

(6) In any of embodiments (1) to (4) above, in the cross section, the four cores may have respective centers that are located one each at four vertices of an isosceles trapezoid three of whose sides each have a length Dc and one of whose sides is longer than Dc. In such a configuration, the cores are identifiable with no markers.

(7) In any of embodiments (1) to (6) above, the common cladding may be in contact with outer peripheral surfaces of the four cores. Such a configuration does not have a complicated refractive-index structure and is therefore manufacturable with increased ease.

(8) In embodiment (7) above, the four cores may each have a relative refractive index difference of 0.50% or less with reference to the refractive index of the common cladding. Such a configuration has neither deeply depressed cladding nor refractive index trench and is therefore manufacturable with increased ease. Furthermore, the refractive index difference between each of the cores and the common cladding is not excessively large. Thus, the transmission loss is reduced.

(9) The MCF according to any of embodiments (1) to (6) above may further include four individual claddings provided on an inner side of the common cladding and each enclosing a corresponding one of the four cores. Letting a relative refractive index difference of each of the four individual claddings with reference to the refractive index of the common cladding be Δic [%], Δic may satisfy Expression (10):

$$-0.20 \leq \Delta ic < 0 \quad (10)$$

Such a configuration has neither deeply depressed cladding nor refractive index trench and is therefore manufacturable with increased ease.

(10) The MCF according to any of embodiments (1) to (6) above may further include four individual claddings provided on an inner side of the common cladding and each enclosing a corresponding one of the four cores. Each of the cores that is located on an inner side of a corresponding one of the individual claddings may have a relative refractive index difference of 0.50% or less with reference to a refractive index of the corresponding individual cladding. Such a configuration has neither deeply depressed cladding nor refractive index trench and is therefore manufacturable with increased ease. Furthermore, the refractive index difference between each of the cores and the corresponding individual cladding is not excessively large. Thus, the transmission loss is reduced.

[Details of Embodiments of Present Disclosure]

Specific examples of the MCF according to the above embodiments will now be described with reference to the drawings as needed. The present disclosure is not limited to the following examples and is defined by the appended claims. It is intended that the present disclosure encompasses any changes equivalent to and within the scope of the claims. In the description of the drawings, like elements are denoted by like reference signs, and redundancy is omitted.

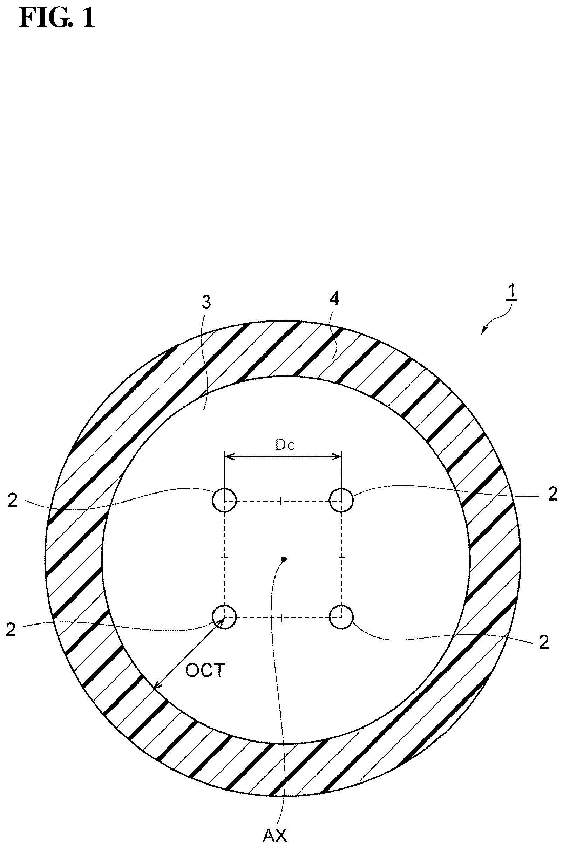

FIG. 1 illustrates a cross section of an MCF according to an embodiment that is taken orthogonally to the center axis thereof. As illustrated in FIG. 1, the MCF, 1, according to the embodiment is a four-core fiber including four cores 2, common cladding 3, and coating resin 4. The cores 2 are made of glass chiefly composed of silica. In the cross section orthogonal to the center axis, AX, the four cores 2 have the same circular shape. The four cores 2 each extend along the center axis AX of the MCF 1.

In the cross section orthogonal to the center axis AX, letting the center-to-center distance between a first core that is one of the four cores 2 and a second core that is located closest to the first core be Dc [μm], the value of Dc is constant regardless of which of the four cores 2 is the first core. That is, the four cores 2 have respective centers that are located one each at the four vertices of a square each of whose sides has a length Dc [μm]. The first core and the second core are adjacent cores, and Dc denotes the center-to-center distance between the adjacent cores. In the MCF 1, since the four cores 2 are arranged in symmetry, optical characteristics are homogenized among the four cores 2.

For each of the four cores 2, letting the effective area at a wavelength of 1550 nm be Aeff [$\mu m^2$] and the cable cutoff wavelength be $\lambda cc$ [$\mu m$], Aeff satisfies Expression (1) and Expression (2) while $\lambda cc$ satisfies Expression (1) and Expression (3). The four cores 2 may have an equal Aeff or different Aeff's. Furthermore, the four cores 2 may have an equal $\lambda cc$ or different $\lambda cc$'s.

$$Aeff \leq -11.919\lambda cc^2 + 153.67\lambda cc - 105.98 \quad (1)$$

$$70 \leq Aeff \leq 101.2 \quad (2)$$

$$1.270 \leq \lambda cc \leq 1.530 \quad (3)$$

If Aeff is 70 $\mu m^2$ or greater, the deterioration of signal-transmission quality due to nonlinear interference is reduced. In Expression (1), to make Aeff be 70 $\mu m^2$ or greater, $\lambda cc$ needs to be 1270 nm or longer. If $\lambda cc$ is 1530 nm or shorter, single-mode behavior is realized at the C band (wavelengths from 1530 nm to 1565 nm) and the L band (wavelengths from 1565 nm to 1625 nm). Accordingly, an optical fiber suitable for optical signal transmission at the C band and the L band is realized. In Expression (1), to make $\lambda cc$ be 1530 nm or shorter, Aeff needs to be 101.2 $\mu m^2$ or smaller.

For each of the four cores 2, Aeff may satisfy Expression (6) while $\lambda cc$ may satisfy Expression (7). For each of the four cores 2, $\lambda cc$ may further satisfy Expression (8).

$$70 \leq Aeff \leq 93.0 \quad (6)$$

$$1.270 \leq \lambda cc \leq 1.460 \quad (7)$$

$$1.360 \leq \lambda cc \quad (8)$$

In Expression (1), to make $\lambda cc$ be 1460 nm or shorter, Aeff needs to be 93.0 $\mu m^2$ or smaller.

The four cores 2 are arranged such that Dc satisfies Expression (4) in relation to the Aeff and $\lambda cc$ of each of the first core and the second core.

$$Dc \geq 62.67 - 44.75\lambda cc + 0.2217Aeff + 9.911\lambda cc^2 \\ - 8.461 \times 10^{-4}Aeff^2 + 3.981 \times 10^{-2}\lambda ccAeff \quad (4)$$

Thus, the XT in co-propagation between adjacent cores at the wavelength 1625 nm is reduced to $10^{-4}$/km or less. Accordingly, the XT in counter-propagation (counter XT) between adjacent cores at the wavelength 1625 nm is reduced to $10^{-4}$/(100 km)$^2$ or less. Such a configuration satisfactorily reduces the deterioration of signal quality due to the XT in counter-propagation. In co-propagation, the direction of optical-signal transmission is the same between adjacent cores. In counter-propagation, the direction of optical-signal transmission is different between adjacent cores.

In long-distance transmission with counter-propagation particularly, the span loss, or the transmission loss in the optical fiber between adjacent amplifying relays (in a span) is small. Therefore, according to NPL 3, what is dominant as a XT permissible in view of reducing the deterioration of signal quality is indirect XT, which is a XT generated between optical signals in co-propagation and through adjacent cores. Indirect XT is proportional to the square of the span length in each span and is therefore expressed herein in units of 1/(100 km)$^2$. Note that $10^{-4}$/(100 km)$^2$ is equal to $10^{-8}$/km$^2$. The cumulative value of indirect XTs over a plurality of spans is linear: a simple sum of the indirect XTs in the respective spans. Therefore, if the XT in counter-propagation is $10^{-4}$/(100 km)$^2$ or less, the counter XT in each span of a transmission system employing a counter-propagation multi-core optical fiber with an average span length of about 100 km or shorter is reduced to about $10^{-4}$/km or less. In the transmission system as a whole, the deterioration of signal quality due to XT is reduced regardless of the length of the optical fiber (or the number of spans). That is, noise due to XT is reduced more than noise due to an optical amplifier or noise due to nonlinear interference.

While the XT in co-propagation is allowed to increase up to such a level as to deteriorate the quality of optical-signal transmission, specifically to $10^{-4}$/km or less, the XT in counter-propagation is kept at or below such a level as to reduce the deterioration of the quality of optical-signal transmission. Such a configuration makes the below-described OCT realize a value that reduces leakage loss.

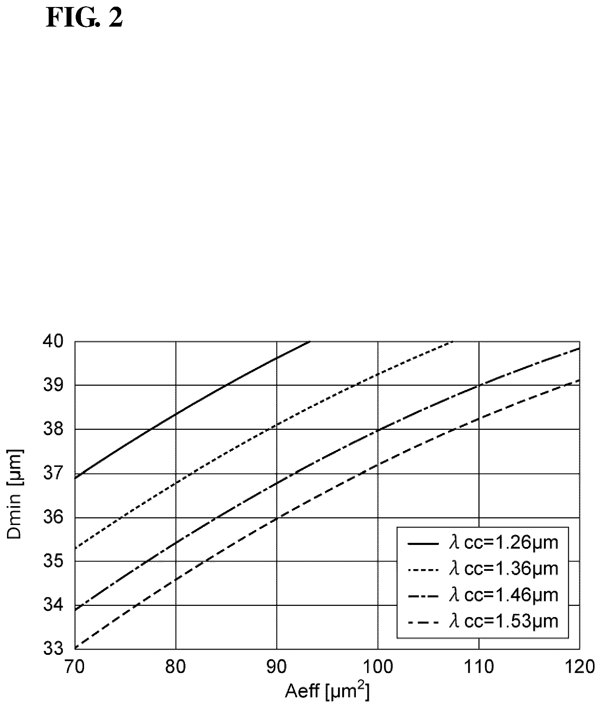

FIG. 2 is a chart illustrating the relationship between the lower limit of Dc (Dmin) and Aeff, the relationship making the XT in counter-propagation at the wavelength 1625 nm be $10^{-4}/(100 \text{ km})^2$ or less and being plotted for a plurality of values of $\lambda$cc. The plurality of values of $\lambda$cc are 1.26 $\mu$m, 1.36 $\mu$m, 1.46 $\mu$m, and 1.53 $\mu$m. In FIG. 2, the horizontal axis represents Aeff [$\mu$m$^2$], and the vertical axis represents Dmin [$\mu$m]. For example, if $\lambda$cc = 1.53 $\mu$m, the relationship between Dmin and Aeff needs to be plotted above the lowest one of the curves in FIG. 2.

The relationships plotted in FIG. 2 are summarized in Expression (4). The chart illustrated in FIG. 2 was obtained by making a plurality of combinations of Aeff, $\lambda$cc, and Dmin. Specifically, a plurality of combinations of Aeff and $\lambda$cc were made by varying the radius, ra, of the cores 2 and the relative refractive index difference, $\Delta$, of the cores. Then, Dmin was calculated for each of the combinations.

The common cladding 3 encloses the four cores 2. The common cladding 3 is in contact with the outer peripheral surfaces of the four cores 2. Between each of the cores 2 and the common cladding 3 is provided no depressed cladding. That is, the MCF 1 does not have a complicated refractive-index structure and is therefore manufacturable with increased ease.

The common cladding 3 is made of glass chiefly composed of silica. The common cladding 3 has a lower refractive index than each of the four cores 2. To produce a refractive index difference between each of the cores 2 and the common cladding 3, germanium (Ge) may be added to the cores 2. Alternatively, fluorine (F) may be added to the common cladding 3. The addition of a trace amount of F to the cores 2 and the common cladding 3 helps realize a depressed profile with increased ease of manufacture.

The relative refractive index difference, $\Delta$c, of each of the cores 2 is 0.50% or less with reference to the refractive index of any cladding that is in contact with the core 2. In the present embodiment, the common cladding 3 is in contact with each of the cores 2. Therefore, the cladding taken as the reference for refractive index is the common cladding 3. The relative refractive index difference $\Delta$c of each of the cores 2 with reference to the refractive index of the common cladding 3 is denoted by $\Delta$1. Specifically, the relative refractive index difference $\Delta$1 of each of the four cores 2 with reference to the refractive index of the common cladding 3 is 0.50% or less. The MCF 1 has neither deeply depressed cladding nor refractive index trench and is therefore manufacturable with increased ease. The refractive index difference produced between each of the cores 2 and the common cladding 3 is not excessively large. Thus, the transmission loss is reduced.

The common cladding 3 has a diameter (cladding diameter) of 124.5 $\mu$m to 125.5 $\mu$m. The common cladding 3 has a diameter (2rb) that is the same as the cladding diameter of a general-purpose single-mode optical fiber that is widely spread. Therefore, the common cladding 3 is as handlable and mechanically reliable as the cladding of the general-purpose optical fiber.

The coating resin 4 encloses the common cladding 3. The coating resin 4 is in contact with the outer peripheral surface of the common cladding 3. The coating resin 4 is, for example, ultraviolet-curable resin.

The four cores 2 are arranged such that, in a cross section orthogonal to the center axis AX, letting the shortest distance between the center of the first core and the interface between the common cladding 3 and the coating resin 4 be OCT (outer cladding thickness) [$\mu$m], the OCT, Aeff, and $\lambda$cc of the first core satisfy Expression (5).

$$\text{OCT} \geq 76.53 - 70.55\lambda\text{cc} + 0.3821\text{Aeff} + 19.56\lambda\text{cc}^2$$
$$- 6.480 \times 10^{-4}\text{Aeff}^2 + 7.279 \times 10^{-2}\lambda\text{ccAeff} \quad (5)$$

Thus, the leakage loss at the wavelength 1625 nm is reduced to 0.001 dB/km or less.

The four cores 2 may alternatively be arranged such that the OCT, Aeff, and $\lambda$cc of the first core satisfy Expression (9).

$$\text{OCT} \geq 78.90 - 72.75\lambda\text{cc} + 0.3936\text{Aeff} + 20.14\lambda\text{cc}^2$$
$$- 6.704 \times 10^{-4}\text{Aeff}^2 + 7.480 \times 10^{-2}\lambda\text{ccAeff} \quad (9)$$

Thus, the leakage loss at the wavelength 1625 nm is reduced to 0.0005 dB/km or less.

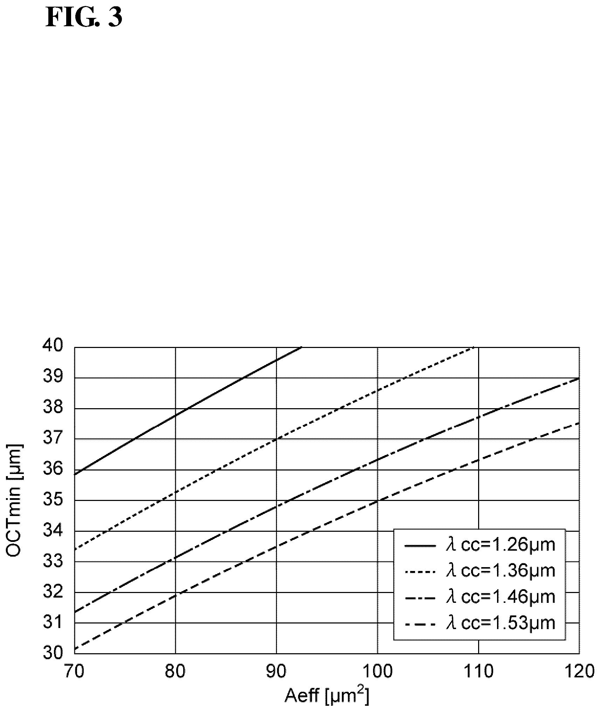

FIG. 3 is a chart illustrating the relationship between the lower limit of OCT (OCTmin) and Aeff, the relationship making the leakage loss at the wavelength 1625 nm be 0.001 dB/km or less and being plotted for a plurality of values of $\lambda$cc. The plurality of values of $\lambda$cc are 1.26 $\mu$m, 1.36 $\mu$m, 1.46 $\mu$m, and 1.53 $\mu$m. In FIG. 3, the horizontal axis represents Aeff [$\mu$m$^2$], and the vertical axis represents OCTmin [$\mu$m]. For example, if $\lambda$cc = 1.53 $\mu$m, the relationship between OCTmin and Aeff needs to be plotted above the lowest one of the curves in FIG. 3.

The relationships plotted in FIG. 3 are summarized in Expression (5). The chart illustrated in FIG. 3 was obtained by making a plurality of combinations of Aeff, $\lambda$cc, and OCTmin. Specifically, a plurality of combinations of Aeff and $\lambda$cc were made by varying the radius ra of the cores 2 and the relative refractive index difference $\Delta$1 of the cores 2 with reference to the refractive index of the common cladding 3. Then, OCTmin was calculated for each of the combinations.

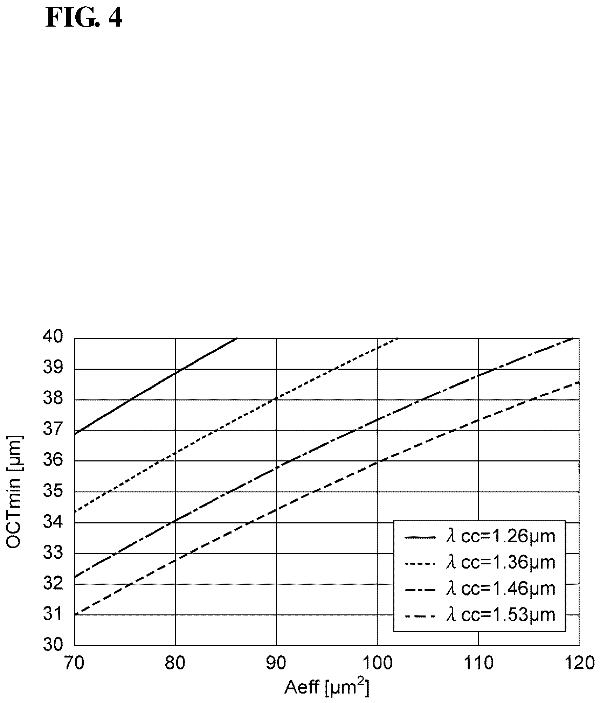

FIG. 4 is a chart illustrating the relationship between the lower limit of OCT (OCTmin) and Aeff, the relationship making the leakage loss at the wavelength 1625 nm be 0.0005 dB/km or less and being plotted for a plurality of values of λcc. The plurality of values of λcc are 1.26 μm, 1.36 μm, 1.46 μm, and 1.53 μm. In FIG. 4, the horizontal axis represents Aeff [μm$^2$], and the vertical axis represents OCTmin [μm]. For example, if λcc = 1.53 μm, the relationship between OCTmin and Aeff needs to be plotted above the lowest one of the curves in FIG. 4.

The relationships plotted in FIG. 4 are summarized in Expression (9). The chart illustrated in FIG. 4 was obtained by making a plurality of combinations of Aeff, λcc, and OCTmin. Specifically, a plurality of combinations of Aeff and λcc were made by varying the radius ra of the cores 2 and the relative refractive index difference Δ of the cores. Then, OCTmin was calculated for each of the combinations.

The diameter of the common cladding 3 is 124.5 μm or greater and 125.5 μm. Therefore, the leakage loss becomes largest if the diameter of the common cladding 3 is 124.5 μm. With the diameter of the common cladding 3 being 124.5 μm, the core pitch (Dc) may vary by ±1 μm relative to the median design value. Nevertheless, in a certain relationship between Aeff and λcc, there exists a median design value for Dc that makes the counter XT at the wavelength 1625 nm satisfy $10^{-4}/(100 \text{ km})^2$ and the leakage loss be 0.001 dB/km or less. Such a relationship is represented by Expression (1). That is, as long as the relationship between Aeff and λcc satisfies Expression (1), even if the core pitch (Dc) varies by ±1 μm relative to the median design value with the diameter of the common cladding 3 being 124.5 μm to 125.5 μm, there exists a median design value for Dc that makes the counter XT at the wavelength 1625 nm satisfy $10^{-4}/(100 \text{ km})^2$ and the leakage loss be 0.001 dB/km or less.

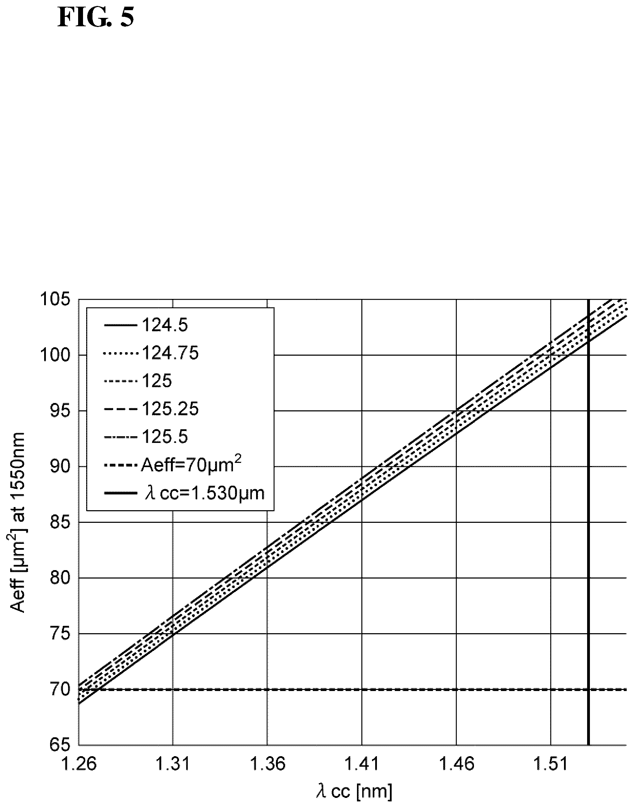

FIG. 5 is a graph illustrating the relationship between the upper limit of Aeff and λcc, the relationship being plotted for a plurality of cladding diameters and making the counter XT at the wavelength 1625 nm satisfy $10^{-4}/(100 \text{ km})^2$ or less and the leakage loss be 0.001 dB/km or less even if the core pitch varies by ±1 μm relative to the median design value. The plurality of cladding diameters were set within a range of 124.5 μm to 125.5 μm. The plurality of cladding diameters are 124.5 μm, 124.75 μm, 125 μm, 125.25 μm, and 125.5 μm. In FIG. 5, the horizontal axis represents λcc [μm], and the vertical axis represents the upper limit of Aeff. In FIG. 5, the innermost one of the substantially triangular areas defined by the curves and the straight lines corresponds to the area where Expression (1), Expression (2), and Expression (3) are satisfied.

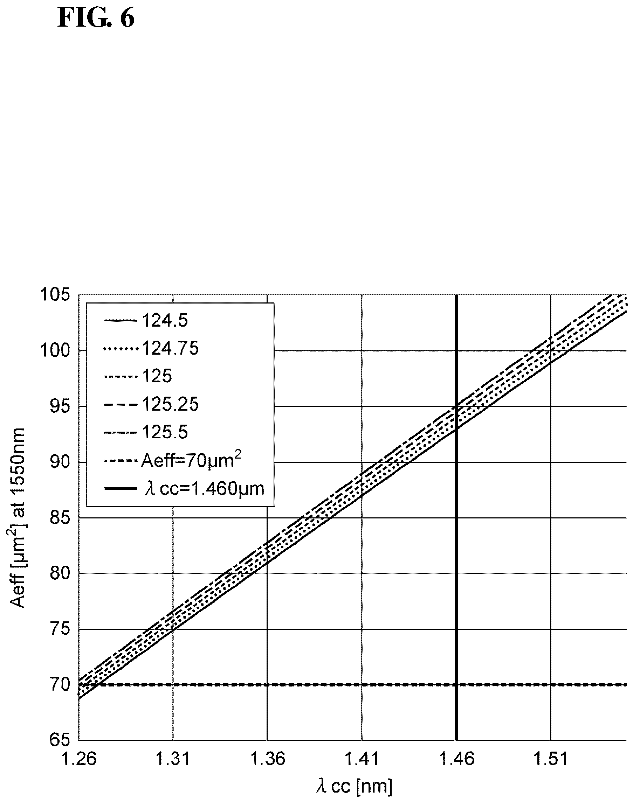

FIG. 6 is a graph illustrating the relationship between the upper limit of Aeff and λcc, the relationship being plotted for a plurality of cladding diameters within the range of 124.5 μm to 125.5 μm and making the counter XT at the wavelength 1625 nm satisfy $10^{-4}/(100 \text{ km})^2$ and the leakage loss be 0.0005 dB/km or less even if the core pitch varies by ±1 μm relative to the median design value. In FIG. 6, the horizontal axis represents λcc [μm], and the vertical axis represents the upper limit of Aeff. In FIG. 6, the innermost one of the substantially triangular areas defined by curves and straight lines corresponds to the area where Expression (1), Expression (6), and Expression (7) are satisfied.

If Expression (1), Expression (2), and Expression (3) are satisfied and if Expression (5) is further satisfied, the bending loss generated by bending with a radius of 25 mm or greater is well below 0.1 dB per 100 turns. Therefore, even if an excess portion of the MCF 1 is wound with a radius of 25 mm or greater to be stored in a relay or a station facility, the increase in the loss is reduced.

To summarize, in the MCF 1 according to the present embodiment, the XT in co-propagation between adjacent cores at the wavelength 1625 nm is $10^{-4}$/km or less. Furthermore, the leakage loss at the wavelength 1625 nm is 0.001 dB/km or less. Such a configuration reduces the deterioration of signal-transmission quality at the wavelength 1625 nm. Employing the MCF 1 reduces the deterioration of signal-transmission quality in long-distance transmission with counter-propagation at least within a wavelength range of 1530 nm to 1625 nm.

While an embodiment has been described above, the present disclosure is not limited to the above embodiment. Various changes can be made to the present disclosure without departing from the essence of the present disclosure.

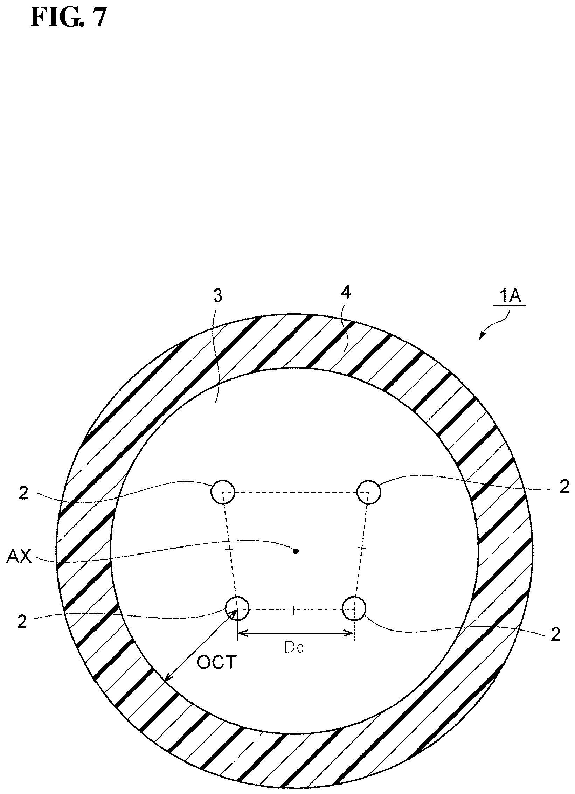

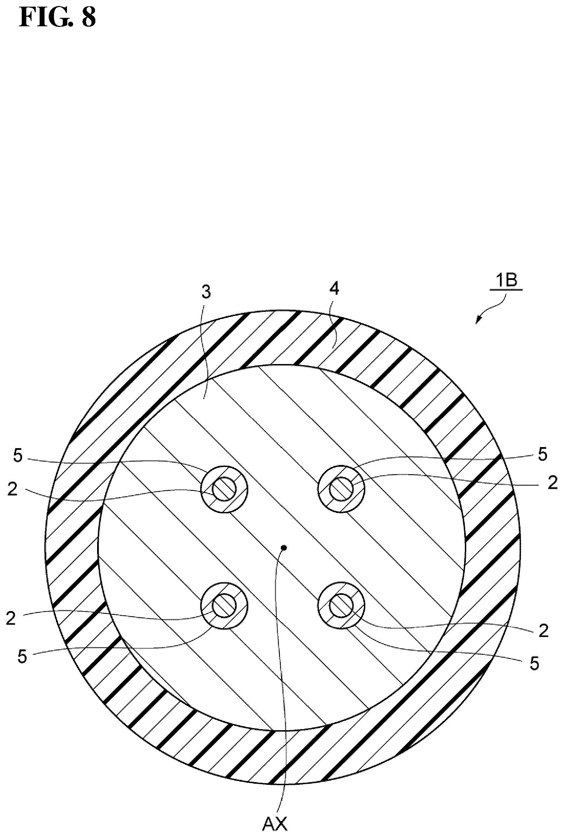

FIG. 7 illustrates a cross section of an MCF according to a first modification that is taken orthogonally to the center axis thereof. As illustrated in FIG. 8, in the cross section of the MCF, 1A, according to the first modification that is taken orthogonally to the center axis AX, the four cores 2 have respective centers that are located one each at the four vertices of an isosceles trapezoid three of whose sides each have a length Dc and one of whose sides is longer than Dc. In the MCF 1A, the cores 2 are identifiable with no markers.

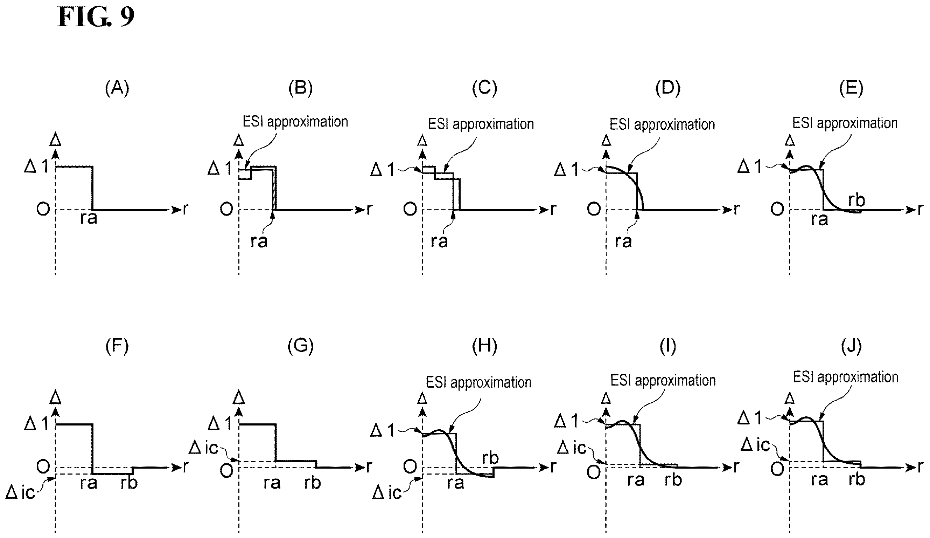

FIG. 8 illustrates a cross section of an MCF according to a second modification that is taken orthogonally to the center axis thereof. As illustrated in FIG. 9, the MCF, 1B, according to the second modification further includes four individual claddings 5. The four individual claddings 5 are provided on the inner side of the common cladding 3 and each enclose a corresponding one of the four cores 2. Letting the relative refractive index difference of each of the four individual claddings 5 with reference to the refractive index of the common cladding 3 be Δic [%], Δic satisfies Expression (10).

$$-0.20 \leq \Delta ic < 0 \quad (10)$$

As described above, the relative refractive index difference $\Delta c$ of each of the cores 2 is 0.50% or less with reference to the refractive index of any cladding that is in contact with the core 2. In the present modification, the cladding taken as the reference for refractive index is a corresponding one of the individual claddings 5, that is, the individual cladding 5 that encloses the core 2 of interest. The MCF 1B has neither deeply depressed cladding nor refractive index trench and is therefore manufacturable with increased ease. The refractive index difference produced between each of the cores 2 and the corresponding individual cladding 5 is not excessively large. Thus, the transmission loss is reduced.

FIG. 9 illustrates refractive index profiles around the core that are applicable to the MCF according to the present disclosure. Regarding the core structure of the MCF according to the present disclosure, the refractive index profile of the core and relevant optical characteristics are selectable from appropriate ones in view of the purpose of use. For example, pattern (A) to pattern (J) illustrated in FIG. 9 are applicable refractive index profiles. In FIG. 9, $\Delta$ denotes the relative refractive index difference with reference to the refractive index of the common cladding, and r denotes the radius vector (radius) with reference to each core center, which are represented in a local coordinate system in which the core center and a $\Delta$ of 0% are defined at the origin, O. The structure may be the same or different between different cores.

Referring to FIG. 9, pattern (A) represents a stepped refractive index profile, pattern (B) represents a ring refractive index profile, pattern (C) represents a double-stepped refractive index profile, pattern (D) represents a graded refractive index profile, and pattern (E) represents a drooping-hem refractive index profile. These patterns are applicable to the core structure of the MCF according to the present disclosure. Furthermore, pattern (F) and pattern (H) each include a depressed refractive index profile around the core; pattern (G), pattern (I), and pattern (J) each include a raised refractive index profile around the core; and pattern (E) includes a matched refractive index profile around the core. These patterns are also applicable to the core structure.

Pattern (A), pattern (B), pattern (C), and pattern (D) are for the MCF 1 according to the embodiment and for the MCF 1A according to the first modification. Pattern (F) and pattern (H), if satisfying Expression (10), are for the MCF 1B according to the second modification.

If ESI (equivalent-step-index) approximation is applied to those refractive index profiles other than the stepped refractive index profile represented by pattern (A), the radius ra and the relative refractive index difference $\Delta 1$ of the core that are approximated by the stepped profile are obtained (NPL 4). NPL 4 is easily applicable if the interface between the core and the cladding is clear. Refractive index profiles represented by pattern (E), pattern (H), pattern (I), and pattern (J), in each of which the interface between the core and the common cladding is unclear, may each be put to ESI approximation by regarding r that makes the smallest $d\Delta/dr$ (the steepest inclination toward the lower right) in the pre-ESI-approximation refractive index profile as the pre-approximation radius of the core. The relative refractive index difference ($\Delta ic$) of the individual cladding may be the average of pre-approximation relative refractive index differences of the cores in respective areas regarded as the individual claddings. Specifically, the average may be taken at the middle point between ra and rb on the horizontal axis (r axis): $(rb - ra)/3 + ra \le r \le 2(rb - ra)/3 + ra$.

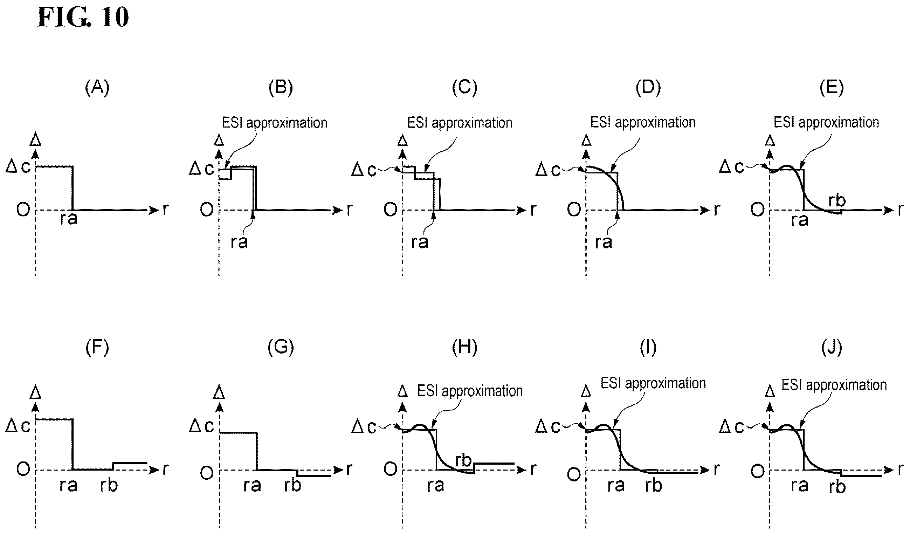

FIG. 10 illustrates refractive index profiles around the core that are applicable to the MCF according to the present disclosure. While $\Delta$ in FIG. 9 is the relative refractive index difference with reference to the refractive index of the common cladding, $\Delta$ in FIG. 10 is the relative refractive index difference with reference to the refractive index of any cladding that is in contact with the core. Hence, in FIG. 10, the relative refractive index difference of the core is denoted by $\Delta c$. Patterns (A) to (E) illustrated in FIG. 10 are based on a configuration in which the common cladding is taken as the reference for refractive index, and therefore represent substantially the same refractive index profiles represented by patterns (A) to (E) in FIG. 9. Patterns (F) to (J) illustrated in FIG. 10 are based on a configuration in which any cladding other than the common cladding is in contact with the core, and therefore represent refractive index profiles that are different from those represented by patterns (F) to (J) illustrated in FIG. 9.

The refractive index profile around the core is not limited to the refractive index profiles represented by patterns (A) to (J) illustrated in FIGs. 9 and 10.

The feature quantities and characteristics of the MCF according to the present disclosure are measurable as follows. The refractive indices of the cores, the common cladding, and the individual claddings are measurable by using, for example, a refraction near-field technique or horizontal interferometry. The diameter of the common cladding is measurable by using, for example, a refraction near-field technique, horizontal interferometry, or a cross-sectional image of the MCF that is observed through a microscope (a transmission near-field technique). The effective area Aeff is measurable by using, for example, a technique described in Appendix III of ITU-T G. 650.2 (08/2015). The cable cutoff wavelength $\lambda cc$ is measurable by using, for example, a technique described in Chapter 6.3 of ITU-T G. 650.1 (10/2020). The center-to-center distance Dc between the first core and the second core located closest to the first core is measurable by using, for example, a refraction near-field technique, horizontal interferometry, or a cross-sectional image of the MCF that is observed through a microscope (a transmission near-field technique). The shortest distance OCT between the center of the first core and the interface between the common cladding and the coating resin is measurable by using, for example, a refraction near-field technique, horizontal interferometry, or a cross-sectional image of the MCF that is observed through a microscope (a transmission near-field technique). The XT in co-propagation is measurable by using a technique described in NPL 5. The XT in counter-propagation is estimatable from the XT in co-propagation and on the basis of an expression described in NPL 3. The leakage loss is measurable by using a technique disclosed in PTL 3. The components of the multi-core fiber are measurable by performing fluorescence X-ray analysis.

While the above expressions are provided with no units, the units of the constants and coefficients in Expressions (1) to (10) are as follows. Note that [-] stands for dimensionless quantity.

$-11.919$ [-], $153.67$ [$\mu$m], $-105.98$ [$\mu$m$^2$]                                    Expression (1):

$70$ [$\mu$m$^2$], $101.2$ [$\mu$m$^2$]                                    Expression(2):

$1.270$ [$\mu$m], $1.530$ [$\mu$m]                                    Expression(3):

$62.67$ [$\mu$m], $-44.75$ [-], $0.2217$ [$\mu$m$^{-1}$], $9.911$ [$\mu$m$^{-1}$], $-8.461\times10^{-4}$ [$\mu$m$^{-3}$], $3.981\times10^{-2}$ [$\mu$m$^{-2}$]                    Expression(4):

$76.53$ [$\mu$m], $-70.55$ [-], $0.3821$ [$\mu$m$^{-1}$], $19.56$ [$\mu$m$^{-1}$], $-6.480\times10^{-4}$ [$\mu$m$^{-3}$], $7.279\times10^{-2}$ [$\mu$m$^{-2}$]                    Expression(5):

$70$ [$\mu$m$^2$], $93.0$ [$\mu$m$^2$]                                    Expression(6):

$1.270$ [$\mu$m], $1.460$ [$\mu$m]                                    Expression(7):

$1.360$ [$\mu$m]                                    Expression(8):

$78.90$ [$\mu$m], $-72.75$ [-], $0.3936$ [$\mu$m$^{-1}$], $20.14$ [$\mu$m$^{-1}$], $-6.704\times10^{-4}$ [$\mu$m$^{-3}$], $7.480\times10^{-2}$ [$\mu$m$^{-2}$]                    Expression(9):

$-0.20$ [%], $0$ [%]                                    Expression(10):

Symbols representing the above physical quantities and the like are regarded as including no units and are regarded as representing values in the units added to the respective symbols. Expressions (1) to (10) hold true even if regarded as dimensionless. In that case, the values of $\lambda$cc used in relevant expressions are in units of [$\mu$m]. In the above description, some of the values of $\lambda$cc are in units of [nm], for comparison with the wavelengths of optical signals.

REFERENCE SIGNS LIST

1, 1A, 1B MCF
2 core
3 common cladding
4 coating resin
5 individual cladding
AX center axis
Dc center-to-center distance between adjacent cores
OCT outer cladding thickness
$\Delta$ relative refractive index difference
$\Delta$c relative refractive index difference of core with reference to cladding that is in contact with core
$\Delta$1 relative refractive index difference of core with reference to refractive index of common cladding
$\Delta$ic relative refractive index difference of individual cladding
ra radius of core
rb radius of cladding

**Claims**

**1.**   A multi-core optical fiber comprising:

four cores each extending along a center axis of the multi-core optical fiber;

common cladding enclosing the four cores and having a lower refractive index than each of the four cores; and

coating resin enclosing the common cladding,

wherein the common cladding has a diameter of 124.5 $\mu$m to 125.5 $\mu$m, wherein, for each of the four cores, letting an effective area at a wavelength of 1550 nm be Aeff [$\mu$m$^2$] and a cable cutoff wavelength be $\lambda$cc [$\mu$m], Aeff satisfies Expression (1) and Expression (2) while $\lambda$cc satisfies Expression (1) and Expression (3), and

wherein, in a section orthogonal to the center axis, letting a center-to-center distance between a first core that is one of the four cores and a second core that is located closest to the first core be Dc [$\mu$m] and a shortest distance between a center of the first core and an interface between the common cladding and the coating resin be OCT [$\mu$m], the four cores are arranged such that Dc satisfies Expression (4) in relation to Aeff and $\lambda$cc of each of the first core and the second core while OCT, Aeff, and $\lambda$cc of the first core satisfy Expression (5):

$$\text{Aeff} \leq -11.919\lambda\text{cc}^2 + 153.67\lambda\text{cc} - 105.98 \quad (1)$$

$$70 \leq \text{Aeff} \leq 101.2 \quad (2)$$

$$1.270 \leq \lambda\text{cc} \leq 1.530 \quad (3)$$

$$\text{Dc} \geq 62.67 - 44.75\lambda\text{cc} + 0.2217\text{Aeff} + 9.911\lambda\text{cc}^2 \\ - 8.461 \times 10^{-4}\text{Aeff}^2 + 3.981 \times 10^{-2}\lambda\text{ccAeff} \quad (4)$$

$$\text{OCT} \geq 76.53 - 70.55\lambda\text{cc} + 0.3821\text{Aeff} + 19.56\lambda\text{cc}^2 \\ - 6.480 \times 10^{-4}\text{Aeff}^2 + 7.279 \times 10^{-2}\lambda\text{ccAeff} \quad (5)$$

2. The multi-core optical fiber according to claim 1,
   wherein, for each of the four cores, Aeff satisfies Expression (6) while $\lambda$cc satisfies Expression (7):

$$70 \leq \text{Aeff} \leq 93.0 \quad (6)$$

$$1.270 \leq \lambda\text{cc} \leq 1.460 \quad (7)$$

3. The multi-core optical fiber according to claim 1 or 2,
   wherein, for each of the four cores, $\lambda$cc satisfies Expression (8):

$$1.360 \leq \lambda\text{cc} \quad (8)$$

4. The multi-core optical fiber according to any of claims 1 to 3,
   wherein the four cores are arranged such that the OCT, Aeff, and $\lambda$cc of the first core satisfy Expression (9):

$$\text{OCT} \geq 78.90 - 72.75\lambda\text{cc} + 0.3936\text{Aeff} + 20.14\lambda\text{cc}^2 \\ - 6.704 \times 10^{-4}\text{Aeff}^2 + 7.480 \times 10^{-2}\lambda\text{ccAeff} \quad (9)$$

5. The multi-core optical fiber according to any of claims 1 to 4,
   wherein, in the section, the four cores have respective centers that are located one each at four vertices of a square each of whose sides has a length Dc.

6. The multi-core optical fiber according to any of claims 1 to 4,
   wherein, in the section, the four cores have respective centers that are located one each at four vertices of an isosceles trapezoid three of whose sides each have a length Dc and one of whose sides is longer than Dc.

7. The multi-core optical fiber according to any of claims 1 to 6,
   wherein the common cladding is in contact with outer peripheral surfaces of the four cores.

8. The multi-core optical fiber according to claim 7,
   wherein the four cores each have a relative refractive index difference of 0.50% or less with reference to the refractive index of the common cladding.

9. The multi-core optical fiber according to any of claims 1 to 6, further comprising:

   four individual claddings provided on an inner side of the common cladding and each enclosing a corresponding one of the four cores,
   wherein, letting a relative refractive index difference of each of the four individual claddings with reference to the refractive index of the common cladding be $\Delta ic$ [%], $\Delta ic$ satisfies Expression (10):

   $$-0.20 \leq \Delta ic < 0 \quad (10)$$

10. The multi-core optical fiber according to any of claims 1 to 6, further comprising:

   four individual claddings provided on an inner side of the common cladding and each enclosing a corresponding one of the four cores,
   wherein each of the cores that is located on an inner side of a corresponding one of the individual claddings has a relative refractive index difference of 0.50% or less with reference to a refractive index of the corresponding individual cladding.

# FIG. 1

# FIG. 2

# FIG. 3

# FIG. 4

# FIG. 5

# FIG. 6

# FIG. 7

# FIG. 8

# FIG. 9

EP 4 628 949 A1

# FIG. 10

## INTERNATIONAL SEARCH REPORT

| International application No. |
|---|
| **PCT/JP2023/040553** |

| A. CLASSIFICATION OF SUBJECT MATTER |
|---|
| *G02B 6/02*(2006.01)i; *G02B 6/036*(2006.01)i <br> FI:   G02B6/02 461; G02B6/036 |
| According to International Patent Classification (IPC) or to both national classification and IPC |

| B. FIELDS SEARCHED |
|---|
| Minimum documentation searched (classification system followed by classification symbols) <br> G02B6/02-6/036 |
| Documentation searched other than minimum documentation to the extent that such documents are included in the fields searched <br><br> Published examined utility model applications of Japan 1922-1996 <br> Published unexamined utility model applications of Japan 1971-2023 <br> Registered utility model specifications of Japan 1996-2023 <br> Published registered utility model applications of Japan 1994-2023 |
| Electronic data base consulted during the international search (name of data base and, where practicable, search terms used) <br><br> JSTPlus/JSTChina/JST7580 (JDreamIII); IEEE Xplore |

### C. DOCUMENTS CONSIDERED TO BE RELEVANT

| Category* | Citation of document, with indication, where appropriate, of the relevant passages | Relevant to claim No. |
|---|---|---|
| X | JP 2020-86054 A (NIPPON TELEGRAPH & TELEPHONE) 04 June 2020 (2020-06-04) <br>    paragraphs [0026]-[0059], fig. 1-20 | 1-5, 9-10 |
| Y | | 6 |
| X | WO 2022/034662 A1 (NIPPON TELEGRAPH & TELEPHONE) 17 February 2022 (2022-02-17) <br>    paragraphs [0020]-[0050], [0054], fig. 1-13, 15-17 | 1-5, 7-10 |
| Y | | 6 |
| Y | JP 2022-66053 A (SUMITOMO ELECTRIC INDUSTRIES) 28 April 2022 (2022-04-28) <br>    paragraphs [0034]-[0037], fig. 2 | 6 |
| A | JP 2020-115191 A (NIPPON TELEGRAPH & TELEPHONE) 30 July 2020 (2020-07-30) <br>    entire text, all drawings | 1-10 |
| A | US 2022/0283362 A1 (CORNING INCORPORATED) 08 September 2022 (2022-09-08) <br>    entire text, all drawings | 1-10 |

| ✓ Further documents are listed in the continuation of Box C. | ✓ See patent family annex. |
|---|---|

| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
|---|---|

| Date of the actual completion of the international search <br><br> **12 December 2023** | Date of mailing of the international search report <br><br> **16 January 2024** |
|---|---|
| Name and mailing address of the ISA/JP <br><br> **Japan Patent Office (ISA/JP)** <br> **3-4-3 Kasumigaseki, Chiyoda-ku, Tokyo 100-8915** <br> **Japan** | Authorized officer <br><br><br> Telephone No. |

Form PCT/ISA/210 (second sheet) (January 2015)

**EP 4 628 949 A1**

**INTERNATIONAL SEARCH REPORT**

International application No.

**PCT/JP2023/040553**

## C. DOCUMENTS CONSIDERED TO BE RELEVANT

| Category* | Citation of document, with indication, where appropriate, of the relevant passages | Relevant to claim No. |
|---|---|---|
| A | US 2022/0043201 A1 (CORNING INCORPORATED) 10 February 2022 (2022-02-10) entire text, all drawings | 1-10 |
| A | SAGAE, Y. et al. Ultra-Low Crosstalk Multi-Core Fiber with Standard 125-μm Cladding Diameter for 10000km-Class Long-Haul Transmission. IEICE TRANSACTIONS ON COMMUNICATIONS. 08 June 2020, vol. E103-B, no. 11, pp. 1199-1205 entire text, all drawings | 1-10 |

Form PCT/ISA/210 (second sheet) (January 2015)

24

## INTERNATIONAL SEARCH REPORT
### Information on patent family members

| International application No. |
|---|
| **PCT/JP2023/040553** |

| Patent document cited in search report | | | Publication date (day/month/year) | Patent family member(s) | | | Publication date (day/month/year) |
|---|---|---|---|---|---|---|---|
| JP | 2020-86054 | A | 04 June 2020 | US | 2022/0003920 | A1 | |
| | | | | paragraphs [0092]-[0165], fig. 1-20 | | | |
| | | | | WO | 2020/105470 | A1 | |
| | | | | EP | 3885804 | A1 | |
| | | | | CN | 112969941 | A | |
| WO | 2022/034662 | A1 | 17 February 2022 | US | 2023/341618 | A1 | |
| | | | | paragraphs [0060]-[0133], [0137], fig. 1-13, 15-17 | | | |
| | | | | EP | 4198585 | A1 | |
| | | | | CN | 116171396 | A | |
| JP | 2022-66053 | A | 28 April 2022 | US | 2022/0120962 | A1 | |
| | | | | paragraphs [0057]-[0060], fig. 2 | | | |
| | | | | EP | 3995870 | A2 | |
| | | | | CN | 114384626 | A | |
| JP | 2020-115191 | A | 30 July 2020 | US | 2022/0120961 | A1 | |
| | | | | WO | 2020/149158 | A1 | |
| | | | | EP | 3913411 | A1 | |
| | | | | CN | 113272691 | A | |
| US | 2022/0283362 | A1 | 08 September 2022 | WO | 2022/187199 | A1 | |
| | | | | EP | 4053606 | A1 | |
| | | | | NL | 2027829 | B | |
| US | 2022/0043201 | A1 | 10 February 2022 | WO | 2022/035630 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022192004 A
- JP 2013088458 A
- JP 2020086054 A
- JP 2017509171 A

**Non-patent literature cited in the description**

- **T. MATSUI et al.** STEP-INDEX PROFILE MULTI-CORE FIBRE WITH STANDARD 125μM CLADDING TO FULL-BAND APPLICATION. *ECOC*, 2019
- **Y. SAGAE et al.** Ultra-Low-XT Multi-Core Fiber with Standard 125-μm Cladding for Long-Haul Transmission. *OECC*, 2019
- **T. HAYASHI et al.** Uncoupled Multi-core Fiber Design for Practical Bidirectional Optical Communications. *OFC*
- **R. J. BLACK** ; **C. PASK**. *J. Opt. Soc. Am. A*, 1984, vol. 1 (11), 1129-1131
- **Y. KOBAYASHI** ; **T. HAYASHI**. Behavior and measurement method of inter-core crosstalk in multicore fibers with core-dependent loss. *Opt. Express*, 2023, vol. 31 (1), 502-508